(19) Europäisches Patentamt
European Patent Office
Office européen des brevets

(11) **EP 4 224 157 A1**

(12) **EUROPEAN PATENT APPLICATION**
published in accordance with Art. 153(4) EPC

(43) Date of publication:
**09.08.2023 Bulletin 2023/32**

(21) Application number: **21875403.4**

(22) Date of filing: **24.09.2021**

(51) International Patent Classification (IPC):
***G01N 27/30*** (2006.01)

(52) Cooperative Patent Classification (CPC):
**G01N 27/30**

(86) International application number:
**PCT/JP2021/035024**

(87) International publication number:
**WO 2022/071101 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020165209**

(71) Applicant: **Nitto Denko Corporation
Ibaraki-shi
Osaka 567-8680 (JP)**

(72) Inventors:
• **YAMADA, Kyotaro**
**Ibaraki-shi, Osaka 567-8680 (JP)**
• **HAISHI, Motoki**
**Ibaraki-shi, Osaka 567-8680 (JP)**
• **SASAHARA, Kazuki**
**Ibaraki-shi, Osaka 567-8680 (JP)**

(74) Representative: **Gill Jennings & Every LLP
The Broadgate Tower
20 Primrose Street
London EC2A 2ES (GB)**

(54) **ELECTRODE**

(57) An electrode (1) includes a resin film (2), a metal underlayer (3), and a conductive carbon layer (4) in sequence in a thickness direction. A surface of the conductive carbon layer (4) has an arithmetic average roughness Ra of 1.50 nm or less and a skewness Rsk of 0.00 or more.

FIG. 1

EP 4 224 157 A1

**Description**

TECHNICAL FIELD

The present invention relates to an electrode.

BACKGROUND ART

There has been known an electrode including a flexible substrate, a metal layer, and a conductive carbon layer in sequence in the thickness direction (ref: for example, Patent Document 1). Patent Document 1 describes in the electrode, noise is suppressed by setting the surface roughness of the conductive carbon layer to 2.0 nm or less.

Citation List

Patent Document

Patent Document 1: Japanese Unexamined Patent Publication No. 2019-105637

SUMMARY OF THE INVENTION

PROBLEM TO BE SOLVED BY THE INVENTION

However, there is a disadvantage that signal intensity is likely to decrease in the electrode described in Patent Document 1.

The present invention provides an electrode capable of suppressing noise and suppressing a decrease in the signal intensity.

MEANS FOR SOLVING THE PROBLEM

The present invention (1) includes an electrode including a resin film, a metal underlayer, and a conductive carbon layer in sequence in a thickness direction, in which a surface of the conductive carbon layer has an arithmetic average roughness Ra of 1.50 nm or less and a skewness Rsk of 0.00 or more.

The present invention (2) includes the electrode described in (1), in which the conductive carbon layer contains metal, and the metal is in a proportion of 5% by mass or more and 50% by mass or less relative to the conductive carbon layer.

The present invention (3) includes the electrode described in (1) or (2), in which the metal is titanium.

The present invention (4) includes the electrode described in any one of the above-described (1) to (3), being an electrode for electrochemical measurement.

EFFECTS OF THE INVENTION

In the electrode of the present invention, the surface of the conductive carbon layer has an arithmetic average roughness Ra of 1.50 or less and a skewness Rsk of 0.00 or more, so that it is possible to suppress noise and also suppress a decrease in the signal intensity.

BRIEF DESCRIPTION OF THE DRAWINGS

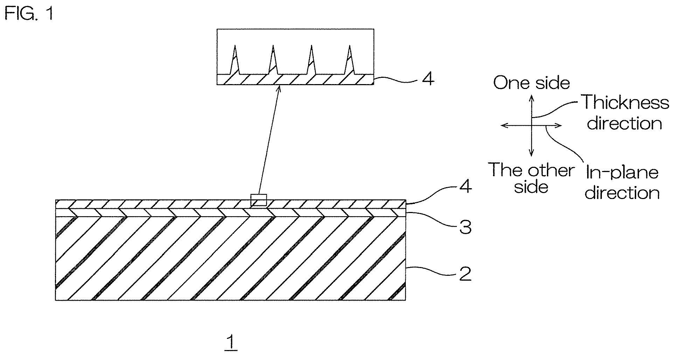

FIG. 1 is a cross-sectional view of one embodiment of an electrode of the present invention.

DESCRIPTION OF THE EMBODIMENTS

<One embodiment>

One embodiment of the electrode of the present invention will be described with reference to FIG. 1.

As shown in FIG. 1, an electrode 1 has a thickness. The electrode 1 has a film shape (including a sheet shape). The electrode 1 includes a resin film 2, a metal underlayer 3, and a conductive carbon layer 4 in sequence toward one side in the thickness direction. The electrode 1 preferably only includes the resin film 2, the metal underlayer 3, and the conductive carbon layer 4.

The resin film 2 has a thickness. The resin film 2 is a substrate film in the electrode 1. The material of the resin film 2 is a resin. Examples of the resin include a polyester resin, an olefin resin, an acetate resin, a polyether sulfone resin, a polycarbonate resin, a polyamide resin, a polyimide resin, a polyolefin resin, an acrylic resin, a polyvinyl chloride resin, a polyvinylidene chloride resin, a polystyrene resin, a polyvinyl alcohol resin, a polyarylate resin, and a polyphenylene sulfide resin. These can be used alone or in combination. For the resin, preferably, a polyester resin is used. Examples of the polyester resin include polyethylene terephthalate (PET) and polyethylene naphthalate. For the polyester resin, preferably, PET is used.

The thickness of the resin film 2 is not particularly limited. The thickness of the resin film 2 is, for example, 2 $\mu$m or more, preferably 20 $\mu$m or more, and for example, 1000 $\mu$m or less, preferably 500 $\mu$m or less.

An arithmetic average roughness Ra of one surface in the thickness direction of the resin film 2 is not particularly limited. The arithmetic average roughness Ra of the one surface in the thickness direction of the resin film 2 is, for example, 5 nm or less, preferably 1 nm or less, and for example, 0.1 nm or more, preferably 0.3 nm or more. The arithmetic average roughness Ra of the one surface in the thickness direction of the resin film 2 is measured in accordance with JIS B0601:2013. The arithmetic average roughness Ra of the following layers are measured in the same manner as above.

A skewness Rsk of the one surface in the thickness direction of the resin film 2 is not particularly limited. The skewness Rsk of the one surface in the thickness direction of the resin film 2 is, for example, -0.3 or more, preferably -0.2 or more, and for example, 1.5 or less, preferably 0.8 or less. The skewness Rsk of the one surface in the thickness direction of the resin film 2 is determined as skewness of a roughness curve in accordance with JIS B0601:2013. The skewness Rsk of the following layers are measured in the same manner as above.

The metal underlayer 3 is disposed on the one surface in the thickness direction of the resin film 2. Specifically, the metal underlayer 3 is in contact with the entire one surface in the thickness direction of the resin film 2. The metal underlayer 3 has a thickness.

The material of the metal underlayer 3 is a metal. Examples of the metal include titanium, chromium, tungsten, aluminum, copper, silver, gold, molybdenum, tantalum, palladium, silicon, and alloys thereof. For the metal, preferably, titanium is used.

The thickness of the metal underlayer 3 is not particularly limited. The thickness of the metal underlayer 3 is, for example, 1 nm or more, preferably 3 nm or more, more preferably 5 nm or more, and for example, 1000 nm or less, preferably 100 nm or less, more preferably 50 nm or less.

The conductive carbon layer 4 is disposed on one surface in the thickness direction of the metal underlayer 3. Specifically, the conductive carbon layer 4 is in contact with the entire one surface in the thickness direction of the metal underlayer 3. The conductive carbon layer 4 has a thickness.

The material of the conductive carbon layer 4 is mainly carbon. The carbon has, for example, an $sp^2$ bond and an $sp^3$ bond. Such carbon has a graphite structure and a diamond structure.

The conductive carbon layer 4 can further contain a metal. When the conductive carbon layer 4 further contains a metal, it is possible to further suppress noise and also further suppress a decrease in the signal intensity. The metal in the conductive carbon layer 4 may be the same as or different from the metal in the metal underlayer 3. Preferably, the metal in the conductive carbon layer 4 is the same as in the metal underlayer 3.

Examples of the metal include titanium, chromium, tungsten, aluminum, copper, silver, gold, molybdenum, tantalum, palladium, silicon, and alloys thereof. For the metal, preferably, titanium is used. When the metal is titanium, it is possible to further enhance adhesion between the conductive carbon layer 4 and the metal underlying layer 3.

The metal is in a proportion of, for example, 0.1% by mass or more, preferably 1% by mass or more, more preferably 5% by mass or more, and for example, 50% by mass or less, preferably 35% by mass or less, even more preferably 20% by mass or less relative to the conductive carbon layer 4. When the proportion of the metal in the conductive carbon layer 4 is the above-described lower limit or more and the above-described upper limit or less, it is possible to further suppress noise and also further suppress a decrease in the signal intensity. The presence or absence of and the proportion of the metal in the conductive carbon layer 4 are determined by X-ray fluorescence measurement.

The conductive carbon layer 4 may further contain a rare gas. Examples of the rare gas include helium, argon, krypton, xenon, and radon. Examples of a method for analyzing the rare gas in the conductive carbon layer 4 include secondary ion mass spectrometry, resonance ionization mass spectrometry, and X-ray fluorescence analysis.

A surface resistance value of one surface in the thickness direction of the conductive carbon layer 4 is not particularly limited. The surface resistance value of the one surface in the thickness direction of the conductive carbon layer 4 is, for example, $1.0 \times 10^4$ $\Omega/\square$ or less, preferably $1.0 \times 10^3$ $\Omega/\square$ or less. The surface resistance is measured by a four-terminal method in accordance with JIS K7194.

The thickness of the conductive carbon layer 4 is not particularly limited. The thickness of the conductive carbon layer 4 is, for example, 1 nm or more, preferably 2 nm or more, more preferably 5 nm or more, and for example, 100 nm or less, preferably 70 nm or less, more preferably 50 nm or less. When the thickness of the conductive carbon layer 4 is the above-described upper limit or less, an arithmetic average roughness Ra to be described later in the one surface in the thickness direction of the conductive carbon layer 4 can be easily set within a desired range. When the thickness of the conductive carbon layer 4 is the above-described lower limit or more, a uniform film can be deposited in an in-plane direction. The in-plane direction is a direction orthogonal to the thickness direction. The thickness of the conductive carbon layer 4 is calculated by measuring X-ray reflectivity.

The arithmetic average roughness Ra of the one surface in the thickness direction of the conductive carbon layer 4 is 1.50 nm or less. The one surface in the thickness direction of the conductive carbon layer 4 in this embodiment is synonymous with the surface of the conductive carbon layer 4. The arithmetic average roughness Ra of the one surface in the thickness direction of the conductive carbon layer 4 is preferably 1.25 nm or less, more preferably 1.00 nm or less, even more preferably 0.75 nm or less, particularly preferably 0.70 nm or less. When the arithmetic average roughness Ra of the one surface in the thickness direction of the conductive carbon layer 4 exceeds the above-described upper limit, noise cannot be suppressed. Specifically, when cyclic voltammetry is performed using the electrode 1, a capacitance value becomes extremely high. This increases noise. That is, in the present embodiment, since the arithmetic average roughness Ra of the one surface in the thickness direction of the conductive carbon layer 4 is 1.50 nm or less, noise can be suppressed. For example, in the present embodiment, the capacitance value measured by cyclic voltammetry can be lowered, and therefore, the suppression of noise as described above is demonstrated (see the Examples section below). To set the arithmetic average roughness Ra of the one surface in the thickness direction of the conductive carbon layer 4 in the above-described range, for example, the thickness of the conductive carbon layer 4 is adjusted.

On the other hand, the lower limit of the arithmetic average roughness Ra of the one surface in the thickness direction of the conductive carbon layer 4 is not particularly limited. The lower limit of the arithmetic average roughness Ra of the one surface in the thickness direction of the conductive carbon layer 4 is, for example, 0.01 nm, preferably 0.10 nm.

The one surface in the thickness direction of the conductive carbon layer 4 has a skewness Rsk of 0.00 or more. The skewness Rsk of the one surface in the thickness direction of the conductive carbon layer 4 is preferably 0.15 or more, more preferably 0.20 or more. When the skewness Rsk of the one surface in the thickness direction of the conductive carbon layer 4 is less than the above-described lower limit, the signal intensity decreases. Specifically, when cyclic voltammetry is performed using the electrode 1, an oxidation-reduction potential difference $\Delta Ep$ increases. This decreases the signal intensity. In other words, in the present embodiment, since the skewness Rsk of the one surface in the thickness direction of the conductive carbon layer 4 is 0.00 or more, it is possible to suppress a decrease in the signal intensity. This demonstrates that a decrease in the signal intensity is suppressed as described above, because the oxidation-reduction potential difference $\Delta Ep$ (specifically, ferricyanide activity value) by cyclic voltammetry is low (see the Examples section below). To set the skewness Rsk of the one surface in the thickness direction of the conductive carbon layer 4 in the above-described range, for example, type of sputtering method, electric power applied to a target, pressure during sputtering, and/or thickness of the conductive carbon layer 4 are adjusted.

The one surface in the thickness direction of the conductive carbon layer 4 having a skewness Rsk of 0.00 or more indicates that the skewness Rsk is 0 or a positive integer. Then, protrusions in the one surface in the thickness direction of the conductive carbon layer 4 are steep and sparse. More specifically, spaces between the protrusions become wider, which in turn increases a proportion occupied by recessed portions. This allows a large amount of measurement target substance to be held in the recessed portions, and the measurement target substance can be measured with good sensitivity, so that it is presumed that a decrease in the signal intensity can be suppressed.

On the other hand, the upper limit of the skewness Rsk of the one surface in the thickness direction of the conductive carbon layer 4 is not particularly limited. The upper limit of the skewness Rsk of the one surface in the thickness direction of the conductive carbon layer 4 is, for example, 1.50.

Next, a method for producing the electrode 1 will be described. First, the resin film 2 is prepared. Then, the metal underlayer 3 and the conductive carbon layer 4 are formed in sequence on one side in the thickness direction of the resin film 2.

Examples of the method for forming the metal underlayer 3 include a dry method and a wet method. Preferably, a dry method is used. Examples of the dry method include a physical vapor deposition (PVD) method and a chemical vapor deposition (CVD) method. For the dry method, preferably, a PVD method is used. Examples of the PVD method include a sputtering method, a vacuum deposition method, a laser vapor deposition method, and an ion plating method (arc vapor deposition method). For the PVD method, preferably, a sputtering method is used. The sputtering method is not particularly limited. Examples of the sputtering method include unbalanced magnetron sputtering (UBM sputtering), high power impulse magnetron sputtering, electron cyclotron resonance sputtering, RF sputtering, DC sputtering (DC magnetron sputtering), DC pulse sputtering, and ion beam sputtering.

In the sputtering method, for example, a sputtering gas and a target are used. The sputtering gas contains a rare gas. Examples of the rare gas include helium, argon, krypton, xenon, and radon. The target is made of the above-described metal.

The pressure during sputtering is, for example, 0.01 Pa or more, and for example, 10 Pa or less.

For the method for forming the conductive carbon layer 4, the same method as the above-described method for forming the metal underlayer 3 is used. For the method for forming the conductive carbon layer 4, preferably a dry method is used, more preferably a PVD method is used, even more preferably a sputtering method is used, particularly preferably a high power impulse magnetron sputtering method and a DC pulse sputtering method are used.

For the target, for example, carbon is used, preferably sintered carbon is used. When the conductive carbon layer 4 contains metal, carbon and metal are used as the target. Specifically, a first target made of carbon (preferably, sintered carbon) and a second target made of metal (preferably, titanium) are used. For example, each of the first target and the second target are disposed in one film deposition chamber independently of the other.

When the first target and the second target are each disposed in a film deposition chamber, a ratio of electric power to be applied thereto is controlled. This allows adjustment of the proportion of the metal contained in the conductive carbon layer 4.

In the DC pulse sputtering method, the pulse width generally refers to a discharge stop period. The pulse width is, for example, 0.5 $\mu$s or more, and for example, 1 ms or less. In the DC pulse sputtering method, the frequency is, for example, 10 kHz or more, and for example, 500 kHz or less.

In the high power impulse magnetron sputtering method, the pulse width generally refers to a discharge duration. The pulse width is, for example, 10 $\mu$s or more, and for example, 3 ms or less. In the high power impulse magnetron sputtering method, the frequency is, for example, 50 Hz or more, and for example, 3 kHz or less.

In this manner, the electrode 1 including the resin film 2, the metal underlayer 3, and the conductive carbon layer 4 in sequence is produced.

<Function and effect of one embodiment>

In this electrode 1, the one surface in the thickness direction of the conductive carbon layer 4 has an arithmetic average roughness Ra of 1.5 nm or less and a skewness Rsk of 0.0 or more. Therefore, it is possible to suppress noise and also suppress a decrease in the signal intensity.

When the conductive carbon layer 4 further contains metal and the metal is in a proportion of 5% by mass or more and 50% by mass or less relative to the conductive carbon layer 4, it is possible to further suppress noise and also further suppress a decrease in the signal intensity.

When the metal is titanium, it is possible to further enhance adhesion between the conductive carbon layer 4 and the metal underlying layer 3.

<Use of electrode 1>

The use of the electrode 1 is not particularly limited. Examples of the use of the electrode 1 include electrodes for electrochemical measurement. Specifically, the electrode 1 is provided in an electrochemical measurement system as a working electrode. In this case, the electrode 1 is used as an electrode for electrochemical measurement. Using the electrochemical measurement system, for example, cyclic voltammetry is performed. Examples of the use of the electrochemical measurement system include a blood glucose level sensor. The blood glucose level sensor measures blood glucose levels in blood.

<Modified Examples>

In the following modified examples, the same reference numerals are provided for members and steps corresponding to each of those in one embodiment described above, and their detailed description is omitted. Further, the modified examples can achieve the same function and effect as that of one embodiment unless otherwise specified. Furthermore, one embodiment and the modified example thereof can be appropriately used in combination.

Though not shown, a modified electrode 1 can further include the metal underlayer 3 and the conductive carbon layer 4 disposed in sequence toward the other side in the thickness direction of the resin film 2. In this modified electrode 1, the conductive carbon layer 4, the metal underlayer 3, the resin film 2, the metal underlayer 3, and the conductive carbon layer 4 are disposed in sequence toward one side in the thickness direction. The other surface in the thickness direction of the conductive carbon layer 4 disposed on the other side in the thickness direction of the resin film 2 has an arithmetic average roughness Ra of 1.5 nm or less and a skewness Rsk of 0.0 or more. In this modified example, each of the one surface and the other surface in the thickness direction of the conductive carbon layer 4 is one example of the surface of the conductive carbon layer 4.

Examples

Next, the present invention will be further described based on Examples and Comparative Examples shown below. The present invention is however not limited by these Examples and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS".

Example 1

A 50 $\mu$m-thick resin film 2 made of polyethylene terephthalate (PET) was prepared. One surface in the thickness direction of the resin film 2 had an arithmetic average roughness Ra of 0.6 nm. The one surface in the thickness direction of the resin film 2 had a skewness Rsk of -0.11.
Then, a metal underlayer 3 made of titanium was formed on the one surface in the thickness direction of the resin film 2 by a DC sputtering method. The metal underlayer 3 had a thickness of 7 nm. Conditions of the DC sputtering method are as follows.

<Conditions of DC sputtering method>

Target: Titanium
Electric power applied to target: 200 W
Shape and size of target: 2-inch diameter cylindrical shape
Sputtering gas: Argon
Pressure in sputtering chamber: 0.3 Pa

Thereafter, a conductive carbon layer 4 was formed on one surface in the thickness direction of the metal underlayer 3 by a DC pulse sputtering method. Conditions of the DC pulse sputtering method will be described below.

<Conditions of DC pulse sputtering method>

First target: Sintered carbon
Second target: Titanium
Electric power applied to first target: 200 W
Electric power applied to second target: 10 W
Shape and size of first target: 2-inch diameter cylindrical shape
Shape and size of second target: 2-inch diameter cylindrical shape
Pressure in sputtering chamber: 0.3 Pa
Pulse width: 1.5 $\mu$s
Frequency: 150 kHz

The conductive carbon layer 4 contained 10% by mass of titanium. The content of the titanium was determined by X-ray fluorescence measurement. However, in the case of X-ray fluorescence measurement, the resulting peak intensities of titanium were derived from both the titanium contained in the conductive carbon layer 4 and the titanium used for the metal underlying layer 3. For this reason, a peak intensity of a sample on which a film of only the titanium of the metal underlying layer 3 was previously deposited under the same conditions as in the sputtering method of the conductive carbon layer 4 was subtracted from the peak of the conductive carbon layer 4, to thereby calculate the content of the titanium contained only in the conductive carbon layer 4. The thickness of the conductive carbon layer 4 was 10 nm. A method for measuring the thickness of the conductive carbon layer 4 will be described later.
In this manner, an electrode 1 including the resin film 2, the metal underlayer 3, and the conductive carbon layer 4 was produced.

Example 2

The same treatment as in Example 1 was performed to produce the electrode 1. However, in the formation of the conductive carbon layer 4, the DC pulse sputtering method was changed to a high power impulse magnetron sputtering method. The average electric power applied to the first target was set to 150 W, and electric power was not applied to the second target. During the application to the first target, the pulse width was changed to 30 $\mu$s, and the

frequency was changed to 210 Hz. The pressure in the sputtering chamber was changed to 1.0 Pa. The conductive carbon layer 4 did not contain titanium and was substantially made of carbon. The thickness of the conductive carbon layer 4 was 35 nm.

Example 3

The same treatment as in Example 1 was performed to produce the electrode 1. However, in the formation of the conductive carbon layer 4, electric power was not applied to the second target. The conductive carbon layer 4 did not contain titanium and was substantially made of carbon.

Comparative Example 1

The same treatment as in Example 1 was performed to produce the electrode 1. However, in the formation of the conductive carbon layer 4, electric power was not applied to the second target. The conductive carbon layer 4 did not contain titanium and was substantially made of carbon. The thickness of the conductive carbon layer 4 was 100 nm.

Comparative Example 2

The same treatment as in Example 1 was performed to produce the electrode 1. However, in the formation of the conductive carbon layer 4, the DC pulse sputtering method was changed to a high power impulse magnetron sputtering method. The electric power applied to the first target was set to 150 W, and electric power was not applied to the second target. During the application to the first target, the pulse width was changed to 30 $\mu$s, and the frequency was changed to 210 Hz. The pressure in the sputtering chamber was changed to 0.6 Pa. The conductive carbon layer 4 did not contain titanium and was substantially made of carbon. The thickness of the conductive carbon layer 4 was 35 nm.

Comparative Example 3

The same treatment as in Example 3 was performed to produce the electrode 1. However, the material of the resin film 2 was changed to cycloolefin resin (COP).

[Evaluation]

The following items were measured. The results are shown in Table 1.

[Measurement of thickness of conductive carbon layer 4]

Using an X-ray reflectivity method as the measurement principle, the thickness of the conductive carbon layer 4 was calculated by measuring an X-ray reflectivity with a powder X-ray diffractometer ("RINT-2200", manufactured by Rigaku Corporation) under the following <measurement conditions> and then analyzing the obtained measurement data with an analytics software ("GXRR3", manufactured by Rigaku Corporation). For the analysis, a three-layer model including the resin film 2 made of PET, the metal underlayer 3 made of titanium, and the conductive carbon layer 4 made of titanium was adopted under the following <analysis conditions>. The targeted thickness of the metal underlayer 3, the arithmetic average roughness Ra of 0.5 nm, and the density of 4.51 g/cm$^3$ were input as initial values. The targeted thickness of the conductive carbon layer 4, the arithmetic average roughness Ra of 0.5 nm, and the density of 1.95 g/cm$^3$ were input as initial values. Thereafter, least square fitting with the measured values was performed, thereby analyzing the thickness of the conductive carbon layer 4.

<Measurement conditions>

Measurement device: Powder X-ray diffractometer ("RINT-2000", manufactured by Rigaku Corporation)
Light source: Cu-K$\alpha$ rays (wavelength: 1,5418 Å), 40 kV, 40 mA
Optical system: Parallel beam optical system
Divergence slit: 0.05 mm
Receiving slit: 0.05 mm
Monochromatization and parallelization: Use of multi-layered Goebel mirror Measurement mode: $\theta/2\theta$ scan mode
Measurement range ($2\theta$): 0.3° to 2.0°

<Analysis conditions>

Analytics software: "GXRR3" manufactured by Rigaku Corporation
Analysis technique: Least squares fitting
Analysis range (2θ): 2θ = 0.3°-2.0°

[Measurement of arithmetic average roughness Ra and skewness Rsk of conductive carbon layer 4]

Using an atomic force microscope (AFM manufactured by Bruker Japan K.K., trade name: MultiMode 8), the shape of the one surface in the thickness direction of the conductive carbon layer 4 was observed in accordance with JIS R1683:2014. From the observation results, the arithmetic average roughness Ra and the skewness Rsk of the one surface in the thickness direction of the conductive carbon layer 4 were determined as defined in JIS B0601:2013.

[Evaluation of electrode]

<Measurement of ferricyanide activity value>

(Suppression of decrease in signal intensity)

An insulating tape was adhered to the one surface in the thickness direction of the conductive carbon layer 4. The insulating tape had a hole with a diameter of 2 mm. Therefore, the electrode had an area of 0.0314 $cm^2$. Thus, the electrode was fabricated as a working electrode. The working electrode was inserted into a potassium chloride solution in which $K_4[Fe(CN)_6]$ was dissolved, and was connected to a potentiostat (pocketSTAT, manufactured by IVIUM). The solution had a potassium chloride concentration of 1.0 mol/L. The solution had a $K_4[Fe(CN)_6]$ concentration of 1.0 mol/L. In the same manner as above, a reference electrode (Ag/AgCl) and a counter electrode (Pt) were inserted into the potassium chloride solution and then connected to the potentiostat. Thereafter, cyclic voltammetry was performed in a potential range of from -0.1 V to 0.5 V at a scan rate of 0.1 V/sec. The oxidation-reduction potential difference ΔEp was acquired as a ferricyanide activity value.
The ferricyanide activity value was applied to the following criteria and the signal intensity of the electrode 1 was evaluated.

Good: The ferricyanide activity value was less than 150 mV.
Bad: The ferricyanide activity value was 150 mV or more.

The lower the ferricyanide activity value is, the more the decrease in the signal intensity of the electrode 1 is suppressed.

<Measurement of capacitance value>

(Suppression of noise)

An insulating tape was adhered to the one surface in the thickness direction of the conductive carbon layer 4. The insulating tape had a hole with a diameter of 2 mm. Therefore, the electrode had an area of 0.0314 $cm^2$. Thus, the electrode was fabricated as a working electrode. The working electrode was inserted into a 1.0 mol/L potassium chloride solution, and was connected to a potentiostat (pocketSTAT, manufactured by IVIUM). In the same manner as above, a reference electrode (Ag/AgCl) and a counter electrode (Pt) were also inserted into the potassium chloride solution and then connected to the potentiostat. Then, cyclic voltammetry was performed in a potential range of from 0 V to 0.5 V at a scan rate of 0.01 V/sec. The capacitance value was determined by substituting into the following equation.

$$\text{Capacitance value} = (\text{sum of absolute values of two current values at } 0.25 \text{ V}) \, [A]/2 \times 0.01 \, [V/sec]/0.0314 \, [cm^2]$$

The unit of the capacitance value is $[A]/[V/sec]/[cm^2]$, which is the same as $[F/cm^2]$.
The capacitance value was applied to the following criteria and the suppression of noise in the electrode 1 was evaluated.

Good: The capacitance value was less than 15 $\mu$F/cm$^2$.
Bad: The capacitance value was 15 $\mu$F/cm$^2$ or more.

The lower the capacitance value is, the more the noise in the electrode 1 is suppressed.

[Table 1]

| TABLE 1 | | Conductive carbon layer | | | | | | Evaluation of electrode | | | |
|---|---|---|---|---|---|---|---|---|---|---|---|
| Examples/ Comparative Examples | Resin film | Film deposition conditions | | Thickness | Metal | Physical properties of one surface in thickness direction | | Signal intensity | | Suppression of noise | |
| | | Sputtering method | Pressure | | | Arithmetic average roughness Ra | Skewness Rsk | | | | |
| | | | [Pa] | [nm] | | [nm] | | | Ferricyanide activity value$\Delta$Ep[mV] | | Capacitance value [mF/cm$^2$] |
| Example 1 | PET | DC pulse sputtering | 0.3 | 10 | 10% by mass of Ti | 0.55 | 0.59 | Good | 80 | Good | 8 |
| Example 2 | PET | High power impulse magnetron sputtering | 1.0 | 35 | - | 0.67 | 0.24 | Good | 120 | Good | 6 |
| Example 3 | PET | DC pulse sputtering | 0.3 | 10 | - | 0.78 | 0.13 | Good | 100 | Good | 10 |
| Comparative Example 1 | PET | DC pulse sputtering | 0.3 | 100 | - | 1.88 | 0.20 | Good | 100 | Bad | 200 |
| Comparative Example 2 | PET | High power impulse magnetron sputtering | 0.6 | 35 | - | 0.61 | -0.06 | Bad | 180 | Good | 6 |
| Comparative Example 3 | COP | DC pulse sputtering | 0.3 | 10 | - | 0.51 | -0.13 | Bad | 640 | Good | 5 |

While the illustrative embodiments of the present invention are provided in the above description, such is for illustrative purpose only and it is not to be construed restrictively.

Modification and variation of the present invention that will be obvious to those skilled in the art is to be covered by the following claims.

Industrial Applicability

The electrode is used for electrochemical measurement.

Description of Reference Numerals

1    electrode
2    resin film
3    metal underlayer
4    conductive carbon layer

**Claims**

1.  An electrode,

    comprising a resin film, a metal underlayer, and a conductive carbon layer in sequence in a thickness direction, wherein a surface of the conductive carbon layer has an arithmetic average roughness Ra of 1.50 nm or less and a skewness Rsk of 0.00 or more.

2.  The electrode according to claim 1, wherein

    the conductive carbon layer comprises metal,
    the metal is in a proportion of 5% by mass or more and 50% by mass or less relative to the conductive carbon layer.

3.  The electrode according to claim 1, wherein the metal is titanium.

4.  The electrode according to claim 2, wherein the metal is titanium.

5.  The electrode according to claim 1, being an electrode for electrochemical measurement.

6.  The electrode according to claim 2, being an electrode for electrochemical measurement.

7.  The electrode according to claim 3, being an electrode for electrochemical measurement.

8.  The electrode according to claim 4, being an electrode for electrochemical measurement.

FIG. 1

One side

Thickness direction

In-plane direction

The other side

1

**INTERNATIONAL SEARCH REPORT**

| International application No. |
|---|
| **PCT/JP2021/035024** |

**A. CLASSIFICATION OF SUBJECT MATTER**

*G01N 27/30*(2006.01)i
FI: G01N27/30 B

According to International Patent Classification (IPC) or to both national classification and IPC

**B. FIELDS SEARCHED**

Minimum documentation searched (classification system followed by classification symbols)

G01N27/00-27/49, B32B1/00-43/00, H01M4/00-4/62, H01M10/00-10/34

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2019-105637 A (NITTO DENKO CORP.) 27 June 2019 (2019-06-27) claims, paragraphs [0001]-[0005], [0022]-[0026], [0035]-[0037], [0048]-[0053], [0100]-[0104], fig. 1 | 1-8 |
| A | WO 2010/004690 A1 (NEC CORP.) 14 January 2010 (2010-01-14) paragraphs [0001], [0019]-[0026], [0035], fig. 1 | 1-8 |
| A | JP 6752432 B1 (NITTO DENKO CORP.) 09 September 2020 (2020-09-09) claims, paragraphs [0005]-[0009], [0024]-[0027], [0065], fig. 1 | 1-8 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| INTERNATIONAL SEARCH REPORT Information on patent family members | | | International application No. PCT/JP2021/035024 | |
|---|---|---|---|---|
| Patent document cited in search report | Publication date (day/month/year) | Patent family member(s) | Publication date (day/month/year) | |
| JP 2019-105637 A | 27 June 2019 | US 2021/0172897 A1 claims, paragraphs [0001]-[0005], [0022]-[0026], [0035]-[0037], [0048]-[0053], [0100]-[0102], fig. 1 EP 3726207 A1 CN 111373248 A | | |
| WO 2010/004690 A1 | 14 January 2010 | (Family: none) | | |
| JP 6752432 B1 | 09 September 2020 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019105637 A